Europäisches Patentamt

European Patent Office

Office européen des brevets

(19)

(11) Veröffentlichungsnummer: **0 038 874**
**A1**

(12) **EUROPÄISCHE PATENTANMELDUNG**

(21) Anmeldenummer: **80108009.4**

(22) Anmeldetag: **18.12.80**

(51) Int. Cl.³: **G 11 B 1/00**
**G 11 B 31/00**

(30) Priorität: **25.04.80 DE 3015972**

(43) Veröffentlichungstag der Anmeldung:
**04.11.81 Patentblatt 81/44**

(84) Benannte Vertragsstaaten:
**AT CH FR GB LI NL SE**

(71) Anmelder: **Braun Aktiengesellschaft**
**Rüsselsheimer Strasse 22**
**D-6000 Frankfurt/Main(DE)**

(72) Erfinder: **Hartwein, Peter**
**Frankfurter Strasse 14a**
**D-6240 Königstein(DE)**

(74) Vertreter: **Einsele, Rolf**
**Braun Aktiengesellschaft Postfach 1120 Am**
**Schanzenfeld**
**D-6242 Kronberg Taunus(DE)**

(54) **Rundfunk- oder Phonogerät mit an der Rückseite vorgesehenen elektrischen Anschlüssen.**

(57) Bei HiFi-Türmen (1), bei denen mehrere Einzelkomponenten (2, 3, 4, 5) übereinander angeordnet sind, sind diese Einzelkomponenten (2, 3, 4, 5) auf der Rückseite mit Kabelkanäle versehen, welche die Kabel (54, 56), die von einer Komponenten zur anderen führen verdecken. Hierbei sind die Seitenteile (45) der Komponenten nach hinten verlängert und mit Aufnahmevorrichtungen für einen Gehäusedeckel (47, 47', 47") versehen.

EP 0 038 874 A1

./...

FIG. 3

**0038874**

---

Rundfunk- oder Phonogerät mit an der Rückseite
vorgesehenen elektrischen Anschlüssen

---

Die Erfindung betrifft eine Vorrichtung nach dem Oberbegriff des
Patentanspruchs 1.

Rundfunk- und Phonogeräte werden in der Regel von derjenigen Seite
aus bedient, an der sich die einzelnen Bedienungsknöpfe und
-schalter befinden. Diese Bedienungs- oder Vorderseite wird von
elektrischen Zuleitungen und Kabeln weitgehend freigehalten, um
die Bedienung nicht zu erschweren. Da jedoch elektrische Zuleitungen unumgänglich sind, sieht man an den Rückseiten der Geräte
Buchsen und Anschlüsse für die Zuleitungen vor. Bei modernen Geräten, die Anschlußmöglichkeiten für zahlreiche Zusatzeinrichtungen
aufweisen, können hierbei sehr viele Leitungen vorgesehen sein,
beispielsweise für die elektrische Versorgungsenergie, die Antennenspannung, die Verbindung von Plattenspieler und Verstärker etc.
Insbesondere bei sogenannten HiFi-Türmen, die aus mehreren Einzelbausteinen bestehen, weisen die Rückseiten aufgrund der Vielzahl
der Leitungen ein Durcheinander von Steckern und Kabeln auf, das
oft nicht leicht zu entwirren ist.

...

Um diese unschönen Leitungen zu verdecken, müssen die Einzelgeräte beziehungsweise der ganze Turm vor eine Wand gestellt werden.

Der Erfindung liegt deshalb die Aufgabe zugrunde, eine Leitungs- und/oder Kabelzuführung für Rundfunk- und Phonogeräte zu schaffen, bei der die Leitungen und Kabel verdeckt sind.

Diese Aufgabe wird gemäß den Merkmalen des Patentanspruchs 1 gelöst.

Der mit der Erfindung erzielte Vorteil besteht insbesondere darin, daß die Geräte auch von ihrer Rückseite her gut aussehen und diese Rückseite somit nicht vor eine Wand gestellt werden muß.

Ein Ausführungsbeispiel der Erfindung ist in der Zeichnung dargestellt und wird im folgenden näher beschrieben.
Es zeigen:
Fig. 1  die Vorderansicht eines HiFi-Turms;
Fig. 2  die Rückseite des HiFi-Turms gemäß Fig.1, wobei eine erfindungsgemäße Kabelzuführung vorgesehen ist;
Fig. 3  eine Seitenansicht des HiFi-Turms in Schnittdarstellung.

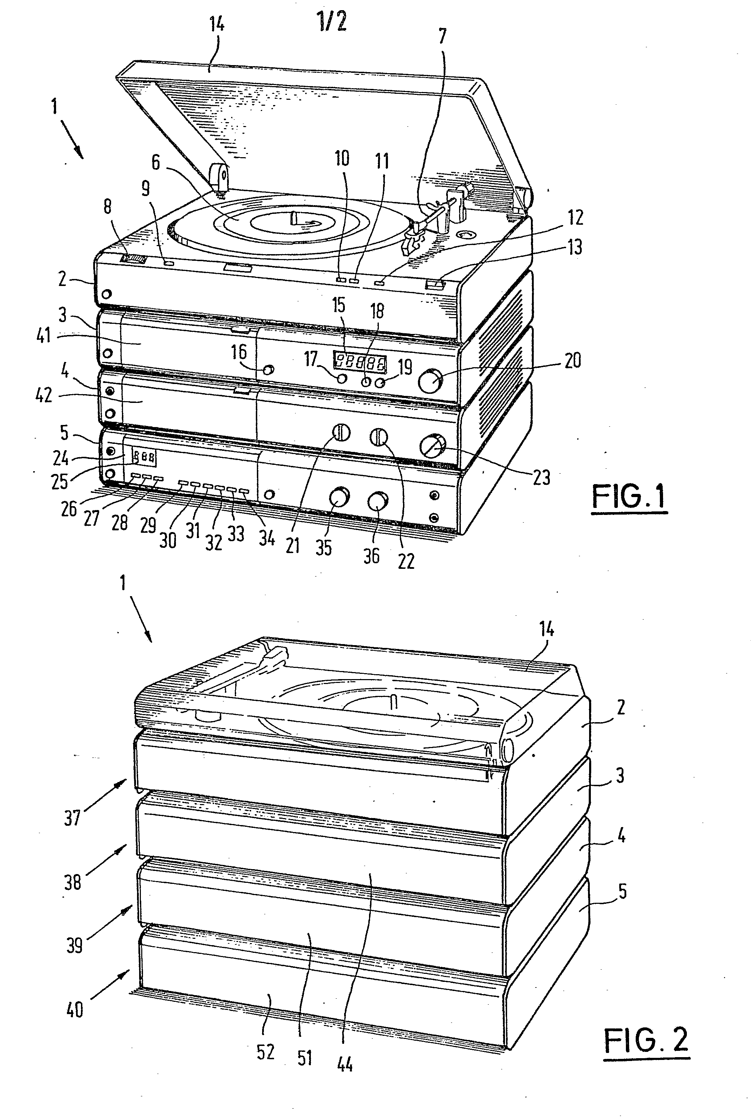

In der Fig.1 ist ein HiFi-Turm 1 gezeigt, der aus einem Plattenspieler 2, einem Tuner 3, einem Verstärker 4 und einem Tonband-Kassettengerät 5 besteht. Der Plattenspieler 2 weist in bekannter Weise einen Plattenteller 6, einen Tonarm 7, verschiedene Bedienungsorgane 8-13 sowie eine hochgeklappte Abdeckhaube 14 auf. Bei dem Tuner 3 erkennt man eine digitale Frequenzanzeige 15 und mehrere Bedienungsorgane 16-20, während der Verstärker 4 mehrere Drehknöpfe 21-23 aufweist. Das Kassettengerät 5 enthält einen Gleit-Kassettenteil 24 mit einer digitalen Bandanzeige 25 und mehreren Bedienungsorganen 26-34. Dieses Gleit-Kassettenteil 24 kann in an sich bekannter Weise aus dem Gehäuse 5 heraus- und in das Gehäuse 5 hineingeschoben werden. Zwei Drehknöpfe 35, 36 sind auf der rechten Seite der Gehäusefront dieses Geräts 5 angeordnet. Der Tuner 3 und Verstärker 4 sind mit jeweils einer Klappe 41, 42 versehen, die nach unten geklappt werden kann und hierdurch weitere Bedienungsknöpfe freigibt.

...

In der Fig.2 ist der HiFi-Turm 1 noch einmal von hinten gezeigt. Man erkennt hierbei wieder den Plattenspieler mit der Abdeckhaube 14, den Tuner 3, den Verstärker 4 und das Kassettengerät 5. Alle diese Bausteine 2, 3, 4, 5 sind auf ihren Rückseiten 37-40 geschlossen, so daß man die Anschlüsse für die Kabel und Leitungen nicht sieht. Die Rückseiten 37-40 sind mit Vorrichtungen 44, 51, 52 versehen, die eine Unterbringung von Verbindungskabeln erlauben.

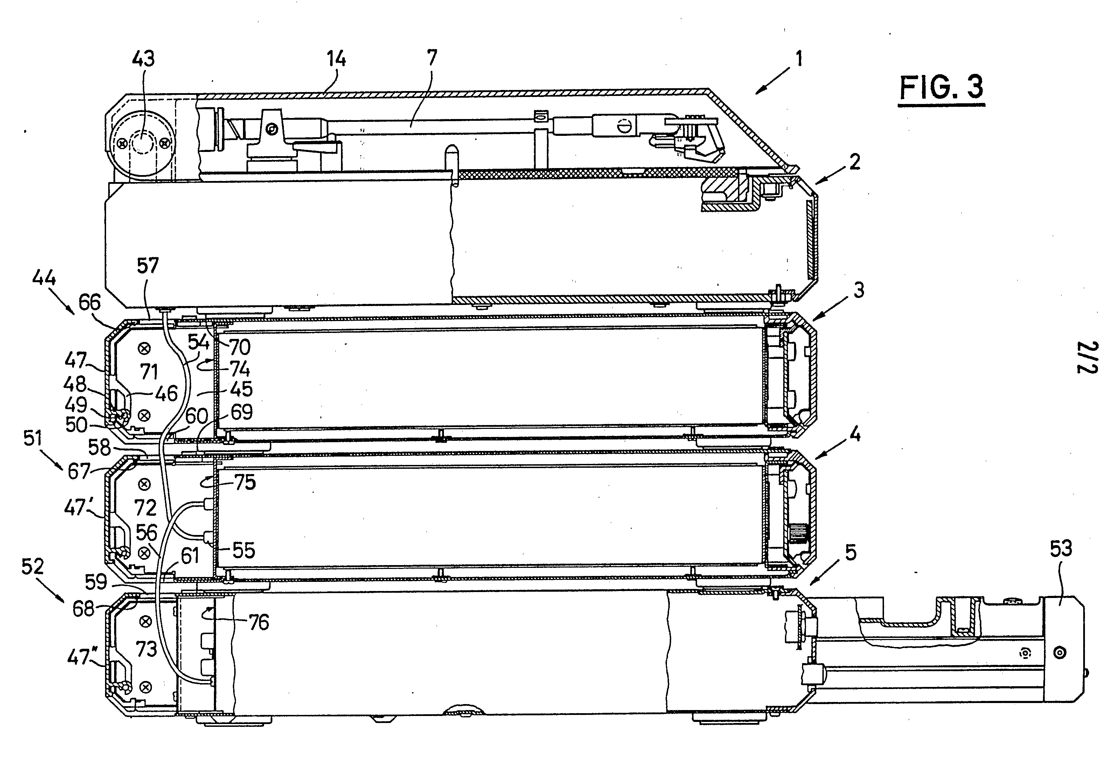

Die Fig.3 zeigt den HiFi-Turm 1 von der Seite, und zwar in teilweise geschnittener Darstellung. Bei dem Plattenspieler 2 ist die Abdeckhaube 14, die teilweise geschnitten dargestellt ist heruntergeklappt. In dem geschnittenen Bereich der Abdeckhaube 14 erkennt man den Tonarm 7, während der nichtgeschnittene Bereich ein Drehlager 43 zeigt. Der Plattenspieler 2 steht auf dem Tuner 3, dessen Gehäuse geschnitten dargestellt ist. Am hinteren Ende dieses Tuners 3 erkennt man die erdindungsgemäße Vorrichtung für die Abdeckung der Kabel und Leitungen. Diese Vorrichtung 44 ist an den eigentlichen Gehäusekörper angeflanscht. Sie besteht aus zwei Seitenwänden, von denen nur eine Seitenwand 45 in Draufsicht zu erkennen ist. Diese Seitenwände sind die Verlängerungen der Seitenwände des in den Figuren 1 und 2 dargestellten Gehäuses 3. An den Seitenwänden 45 sind Führungen 46 für einen Abschlußdeckel 47 vorgesehen, der vollständig von dem Gehäuse gelöst werden kann. Dieser Abschlußdeckel 47 weist zwei nach innen gerichtete Vorsprünge 48 auf, die jeweils mit einer einen Zapfen 49 tragenden Verdickung 50 versehen sind. Die Zapfen 49 werden durch die Führungen 46 geführt, die als Vertiefungen ausgebildet sind.

Eine der Vorrichtung 44 entsprechende Vorrichtung 51, 52 weisen auch der Verstärker 4 und das Kassettengerät 5 auf. Bei dem Kassettengerät 5, das, wie bereits erwähnt, ein Gleit-Kassettenteil enthält, ist die die Kassette aufnehmende Schublade 53 herausgeschoben. Der Plattenspieler 2 weist bei der in der Fig.3 dargestellten Anordnung keine Vorrichtung 44, 51, 52 auf. Es ist jedoch im Bedarfsfall möglich, auch am Plattenspieler 2 ein solche Vorrichtung vorzusehen.

Die beiden Verbindungsleitungen 54 und 56 sind nur exemplarisch für viele weitere Leitungen dargestellt, die zwischen den einzelnen Komponenten des HiFi-Turms 1 vorgesehen sein können. Man erkennt hierbei, daß einerseits die Leitungen von außen nicht sichtbar sind und andererseits aufgrund der Spalten 57-61, die in den Vorrichtungen 44, 51, 52 vorgesehen sind, zahlreiche elektrische Verbindungen zwischen den Komponenten vorgesehen sein können.

Die Gehäusedeckel 47, 47', 47" sind bei allen drei Geräten 3, 4, 5 gleich ausgebildet. Vorzugsweise bestehen sie aus einem Aluminiumstrangpreßprofil, das so ausgestattet ist, daß auf beiden Schnittseiten Zapfen 49 als Drehlager eingeschlagen werden können.

Soll ein Gehäusedeckel 47, 47', 47" eingehängt werden, so werden die Zapfen, von denen nur der Zapfen 49 in der Fig.3 dargestellt ist, auf beiden Seiten an die oberen Enden 63, 64, 65 angesetzt und nach unten geschoben, bis sie die Lage einnehmen, die in der Fig.3 dargestellt ist. Jetzt kann der Gehäusedeckel 47, 47', 47" um den Zapfen 49 geschwenkt werden. Am oberen Ende des Gehäusedeckels 47, 47', 47" ist ein Vorsprung 66, 67, 68 vorgesehen, der in eine entsprechende Einkerbung der Seitenwände 45 eingreift. Hierdurch wird der Gehäusedeckel 47, 47', 47" arretiert.

Der Zeitraum 71, 72, 73 zwischen einer Gehäuserückwand 74, 75, 76 und einem geschlossenen Gehäusedeckel 47, 47', 47" ist so groß bemessen, daß er alle nötigen Stecker und Kabel aufnehmen kann.

Für die Durchführung der Kabel und Leitungen 54, 56 von einem Gerät zum anderen ist, wie bereits erwähnt, über die ganze Gehäusebreite zwischen Gehäusedeckel 47 und Bodenblech 69 und Deckblech 70 ein Spalt 57-61 offen. Die Innenseiten der Gehäusedeckel 47, 47', 47" sind zweckmäßigerweise mit einer Druckgrafik versehen, damit bei installierter Anlage und geöffnetem Gehäusedeckel die Steckerbuchsen leicht auffindbar sind.

...

0038874

Patentansprüche

1. Rundfunk- oder Phonogerät mit an der Rückseite vorgesehenen elektrischen Anschlüssen, dadurch gekennzeichnet, daß die Seitenteile (45) des Rundfunk- oder Phonogeräts (3, 4, 5) nach hinten verlängert sind und Aufnahmevorrichtungen für einen Gehäusedeckel (47, 47', 47") aufweisen, der die Seitenteile (45) abschließt.

2. Rundfunk- oder Phonogerät nach Anspruch 1, dadurch gekennzeichnet, daß der Gehäusedeckel (47, 47', 47") an seinem unteren Bereich Vorsprünge (48) mit Zapfen (49) aufweist, wobei diese Zapfen (49) in Aussparungen (46) der Seitenteile (45) eingehängt werden können.

3. Rundfunk- oder Phonogerät nach Anspruch 1, dadurch gekennzeichnet, daß der Gehäusedeckel (47, 47', 47") an seinem oberen Bereich mindestens einen Vorsprung (66, 67, 68) aufweist, mit dem er in mindestens eine entsprechende Aussparung der Seitenteile (45) eingreifen kann.

4. Rundfunk- oder Phonogerät nach Anspruch 1, dadurch gekennzeichnet, daß zwischen der Rückseite (74, 75, 76) und dem Gehäusedeckel (47, 47', 47") ein Raum (71, 72, 73) für die Aufnahme von Leitungen (54, 56) oder dergleichen vorgesehen ist.

...

5. Rundfunk- oder Phonogerät nach Anspruch 1, dadurch gekennzeichnet, daß zwischen dem oberen Ende des Gehäusedeckels (47, 47', 47") und dem Deckblech (70) des Gehäuses sowie zwischen dem unteren Ende des Gehäusedeckels (47, 47', 47") und dem Bodenblech (69) des Gehäuses jeweils ein Spalt (55, 57, 58, 59, 60, 61) über die Breite des Gehäuses vorgesehen ist.

6. Rundfunk- oder Phonogerät nach Anspruch 1, dadurch gekennzeichnet, daß die Seitenteile (45) Führungen (46) aufweisen, die zunächst nach außen, nach innen und dann nach unten verlaufen.

7. Rundfunk- oder Phonogerät nach den Ansprüchen 1 und 5, dadurch gekennzeichnet, daß mehrere Geräte (2, 3, 4, 5) derart übereinander gestapelt sind, daß die Spalten (57, 58, 59, 60, 61) übereinanderliegen, so daß die Leitungen und Kabel von einem Gerät (z. B. 3) zum anderen Gerät (z. B.4) geführt werden können, ohne daß sie nach außen sichtbar sind.

FIG.1

FIG.2

FIG. 3

| | Europäisches Patentamt | EUROPÄISCHER RECHERCHENBERICHT | **0038874** Nummer der Anmeldung<br>EP 80 10 8009 |
|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 032 414 (OSAKA ONKYO KABUSHIKI KAISHA)<br><br>* Figuren 1-3; Seite 3, Zeile 3 - Seite 4, Zeile 15 * | 1 |
| A | DE - A - 2 924 320 (OLYMPUS OPTI-CAL)<br><br>* Figuren 1,5; Seite 7, Zeilen 9-15 * | 1 |

**KLASSIFIKATION DER ANMELDUNG (Int. Cl.³)**

G 11 B 1/00
31/00

**RECHERCHIERTE SACHGEBIETE (Int. Cl.³)**

G 11 B 1
G 11 B 31
H 05 K 7

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-08-1981 | TYBERGHIEN |

EPA form 1503.1 06.78